# EUROPÄISCHE PATENTSCHRIFT

(11) **EP 3 074 226 B1**
(45) Veröffentlichungstag und Bekanntmachung des Hinweises auf die Patenterteilung: **23.09.2020**
(21) Anmeldenummer: 14805491.9
(22) Anmeldetag: 26.11.2014
(51) Int. Cl.: B32B 27/08, B32B 27/30, B32B 33/00

(54) **MEHRSCHICHTIGER VERBUNDKÖRPER**
MULTILAYER COMPOSITE BODY
CORPS COMPOSITE MULTICOUCHES

(30) Priorität: 29.11.2013 DE 202013105459 U
(43) Veröffentlichungstag der Anmeldung: 05.10.2016
(73) Patentinhaber: REHAU AG + Co, 95111 Rehau (DE)
(72) Erfinder: ENGELBRECHT, Thorsten, 95502 Himmelkron (DE); MEHNERT, Hans Peter, 95126 Schwarzenbach / Saale (DE)
(86) Internationale Anmeldenummer: PCT/EP2014/003159
(87) Internationale Veröffentlichungsnummer: WO 2015/078582

(56) Entgegenhaltungen:
- DE-A1- 2 730 899
- US-A1- 2002 058 144

## Beschreibung

Die Erfindung betrifft einen mehrschichtigen Verbundkörper, umfassend eine obere Schicht, einer Zwischenschicht sowie eine untere Schicht.

Derartige mehrschichtige Verbundkörper sind aus dem Stand der Technik bekannt. So beschreibt beispielsweise die DE 2 730 899 einen mehrschichtigen Verbundkörper aus einer vorzugsweise 50 bis 100 µm dicken transparenten Deckschicht und einer Trägerschicht, wobei die Deckschicht aus Polycarbonat, einem niedrig schmelzenden thermoplastischen Polyester, einem transparenten ABS-Polymerisat oder PMMA besteht, die Trägerschicht vorzugsweise mehr als ca. 500 µm dick und aus Polyvinylchlorid oder einem Styrolpolymerisat, vorzugsweise einem schlagzähmodifizierten Polystyrol, aufgebaut ist und die Deckschicht mit der Trägerschicht ggf. über eine oder mehrere Zwischenschichten festhaftend miteinander verbunden ist, wobei die der Deckschicht benachbarte Schicht entweder auf der der Deckschicht zugekehrten Seite dekorativ bedruckt oder geprägt oder eingefärbt und geprägt ist. Die Polycarbonate sind dabei bekannte handelsübliche Materialien, als thermoplastische Polyester dienen vorzugsweise Polybutylenterephthalat und / oder modifiziertes Polybutylenterephthalat. Als ABS-Polymerisate sollen Styrol-Acrylnitril-Copolymerisate eingesetzt werden. Das PMMA ist transparent ausgebildet und kann dabei schlagzäh modifiziert sein.

Das Polyvinylchlorid ist ein Hart-PVC. Als Styrolpolymerisat soll ein schlagzähmodifiziertes Styrolpolymerisat wie beispielsweise ABS- oder ASA-Polymerisate eingesetzt werden, die sich durch eine hohe Schlagzähigkeit auszeichnen. Die Zwischenschichten bestehen aus thermoplastischen Materialien und verbinden die Deckschicht mit der Trägerschicht so fest miteinander, dass auch bei mechanischer Belastung der mehrschichtige Verbundkörper erhalten bleibt. Die Zwischenschichten sind dabei als Folien mit einer Dicke von etwa 30 bis 100 µm hergestellt.
Derartige mehrschichtige Verbundkörper werden beispielsweise auf dem Sanitärsektor verwendet zur Herstellung von Duschwannen, Waschbecken und dergleichen, wobei hier vor allem die Härte, die Kratzfestigkeit und der Glanz der Oberfläche als wichtig eingeschätzt werden und die Möglichkeit, Oberflächenschäden durch Polieren auszubessern, ausgenutzt werden soll. Weiterhin ist dieser mehrschichtige Verbundkörper durch beispielsweise Tiefziehen so zu gestalten, dass sowohl die mechanischen als auch die optischen Eigenschaften des daraus herstellten Badewanneneinsatzes, der Duschwanne und dergleichen nach der Verformung annähernd erhalten bleiben.

Nachteilig bei diesem mehrschichtigen Verbundkörper wird gesehen, dass dessen Herstellung sehr aufwendig und basierend auf den gewählten Materialien sehr kostenintensiv ist. Weiterhin nachteilig wird gesehen, dass der Einsatz dieses mehrschichtigen Verbundkörpers insbesondere in der Möbelindustrie zur Herstellung von Möbelteilen mit einer hochwertigen, flächigen Oberfläche nur bedingt einsetzbar ist. Dies insbesondere durch den komplexen Schichtaufbau dieses mehrschichtigen Verbundkörpers sowie der gewählten Materialkombinationen. Mit dem mehrschichtigen Verbundkörper aus dem Stand der Technik lassen sich keine Oberflächen erzeugen die hochglänzend sind und / oder die mattiert sind.

Ein weiterer mehrschichtiger Verbundkörper ist in der DE 20 2010 013 841 U1 beschrieben. Dieser mehrschichtige Verbundkörper betrifft eine Möbelbauplatte, wobei eine Oberseite eines Trägers aus einem Holz oder Holzersatzstoff mit einer klarsichtigen oder satinierten Kunststoffplatte verklebt ist, das die Kunststoffplatte unterseitig mit einem farbigen Lack versehen ist, das die Kunststoffplatte oberseitig mit einem kratzfesten Klarlack versehen ist und das die Kanten der auf Maß geschnittenen Möbelbauplatte mit einer Kunststoffkante in einer Glasoptik belegt sind. Die Kunststoffplatte soll dabei aus einem Acryl oder aus einem Polycarbonat bestehen und eine Materialstärke von etwa 2 mm bis 4 mm aufweisen. Nachteilig bei diesem mehrschichtigen Verbundkörper wird gesehen, dass die für eine stoffschlüssige Verbindung mit dem Träger aus einem Holz oder Holzersatzstoff absolut eben und plan herzustellen ist, was den Aufwand hierfür immens in die Höhe treibt.
Ein weiterer Nachteil dieses mehrschichtigen Verbundkörpers wird darin gesehen, dass bei dem Verkleben der rückseitig mit einem farbigen Lack versehenen Kunststoffplatte auf dem Träger die Lackschicht beschädigt bzw. zerstört wird, so dass die so hergestellte Möbelbauplatte nicht mehr verwendbar ist. Weiterhin nachteilig wird gesehen, dass die Farbstabilität über lange Zeiträume nicht gewährleistet ist und das dieser Verbundkörper insbesondere bei Beanspruchungen durch unterschiedliche Temperaturen frühzeitig versagt.

Die US 2002/058144 A1 beschreibt einen weiteren mehrschichtigen Verbundkörper umfassend eine foliendekorierte Platte, die einstückig an die Oberfläche eines Formharzes gebunden ist, wobei die Platte in der Form eines Laminats vorliegt, das einen transparenten Acrylfilm, einen bindenden oberflächenseitigen Film und eine Dekorschicht, die zwischen dem Acrylfilm und dem bindenden oberflächenseitigen Film beispielsweise durch konventionelle Druckverfahren gebildet ist, aufweist. Der bindende oberflächenseitige Film soll dazu dienen, mit dem Formharz stoffschlüssig verbunden zu werden. Der bindende oberflächenseitige Film und das Formharz umfasst identische Komponentenharze, wobei der bindende oberflächenseitige Film einen Polypropylen- Film oder einen Acrylnitril- Butadien- Styren-Film aufweist. Weiterhin wird offenbart, dass zur Verbesserung der Adhäsionseigenschaften zwischen dem Acrylfilm und dem bindenden oberflächenseitigen Film, eine zusätzliche Klebstoffschicht angeordnet ist, welche zwischen der Dekorschicht und dem bindenden oberflächenseitigen Film positioniert ist. Diese Klebstoffschicht kann bestehen aus Polyvinylchlorid- Vinylacetat- Copolymerharzen, aus Acrylharzen oder Urethanharzen.

Hier setzt die Erfindung ein, die sich die Aufgabe gestellt hat, die Nachteile des Standes der Technik zu überwinden und einen mehrschichtigen Verbundkörper aufzuzeigen, der einfach und kostengünstig herstellbar ist, der für den Einsatz insbesondere im Möbelbau mit verschiedenartigen Dekoren und in verschiedenen Glasoptiken zur Verfügung stellbar ist.

Erfindungsgemäß wird diese Aufgabe durch die Merkmale des Anspruches 1 gelöst. Weitere vorteilhafte Ausgestaltungen sind in den Unteransprüchen beschrieben.

Es hat sich überraschend herausgestellt, dass ein mehrschichtiger Verbundkörper, umfassend eine obere Schicht, eine Zwischenschicht sowie eine untere Schicht sich dadurch auszeichnet, dass er eine obere Schicht aus wenigstens einem (Meth)acrylatcopolymer, welches einen Längenausdehnungskoeffizient von etwa 7 bis 9,5 x 10⁻⁵ K⁻¹, vorzugsweise 7 bis 9,5 x 10⁻⁵ K⁻¹, gemessen nach ISO 11359 aufweist, eine Zwischenschicht aus wenigstens einem (Meth)acrylatcopolymer, enthaltend Pigmente und/oder Farbstoffe und ggf. Lichtschutzmittel, die aus einem mit der oberen Schicht identischen oder verschiedenen (Meth)acrylatcopolymer besteht mit einem Längenausdehnungskoeffizient von etwa 7 bis 9,5 x 10⁻⁵ K⁻¹, vorzugsweise 7 bis 9,5 x 10⁻⁵ K⁻¹, gemessen nach ISO 11359, eine untere Schicht, enthaltend Pigmente und/oder Farbstoffe und ggf. Lichtschutzmittel sowie wenigstens ein Styrolpolymer, insbesondere Styrolcopolymer, welches einen Blend von Acrylnitril-Butadien-Styrol-Copolymer (ABS) mit einem Anteil von etwa 10 bis 90 Gew.-% Styrol-Acrylnitril (SAN), vorzugsweise 20 bis 80 Gew.-% Styrol-Acrylnitril (SAN) aufweist, welches einen Längenausdehnungskoeffizient von etwa 6,5 bis 9,5 x 10⁻⁵ K⁻¹, vorzugsweise 6,5 bis 9,5 x 10⁻⁵ K⁻¹, gemessen nach ISO 11359 aufweist, sowie eine Verarbeitungsschwindung von etwa 0,3 bis 0,7 % gemessen nach ISO 294-4, wobei der mehrschichtige Verbundkörper eine Gesamtdicke von wenigstens 1 mm und das Material des mehrschichtigen Verbundkörper einen Längenausdehnungskoeffizient von etwa 5 bis 7 x 10⁻⁵ K⁻¹, vorzugsweise 5 bis 7 x 10⁻⁵ K⁻¹, gemessen nach ISO 11359 aufweist.
Dieser mehrschichtige Verbundkörper kombiniert die Vorteile der oberen Schicht aus einem (Meth)acrylatcopolymer mit einer außerordentlichen Glasoptik mit der darunter angeordneten Zwischenschicht aus einem (Meth)acrylatcopolymer, welche Pigmente und / oder Farbstoffe und ggf. Lichtschutzmittel aufweist und somit eine hohe Farbstabilität aufweist zusätzlich mit einer darunter angeordneten Unterschicht aus einem Styrolpolymer, insbesondere Styrolcopolymer, welches eine hohe Affinität und eine sehr gute Verklebbarkeit mit darunter anzuordnenden Trägern aus beispielsweise Holz oder Holzersatzwerkstoffen oder Holzersatzwerkstoffen aufweist.

Ein weiterer Vorteil des mehrschichtigen Verbundkörpers wird darin gesehen, dass insbesondere bei der Verwendung eines Styrolcopolymer wie beispielsweise Arcylnitril-Butadien Styrol die Planität des gesamten mehrschichtigen Verbundkörpers positiv beeinflusst ist.

Weiterhin kann bei dem mehrschichtigen Verbundkörper durch den gewählten Schichtaufbau über die gesamte Breite bzw. über die gesamte Länge eine überzeugende Glasoptik sowie eine ausreichende Farbkonstanz sichergestellt werden, der mehrschichtige Verbundkörper weist über seine Breite sowie über seine Länge eine nahezu konstante Wandstärke bzw. Planität auf, ohne das es hier zu Verzug des mehrschichtigen Verbundkörpers in eine Richtung kommt.

Es hat sich weiterhin überraschend herausgestellt, dass der mehrschichtige Verbundkörper in seinem Schichtaufbau und in der Wahl der Werkstoffe der jeweiligen Schichten so zur Verfügung gestellt werden kann, dass ein Verzug nahezu ausgeschlossen ist und das einerseits durch die Dimensionierung der Dicke der Schichten und / oder anderseits der sich durch die aus den Materialien ergebenden Längenausdehnungskoeffizient ein nahezu ebener mehrschichtiger Verbundkörper herstellbar ist, der insbesondere bei einer anschließenden Verwendung zur Herstellung einer Möbelbauplatte problemlos fixierbar und bearbeitbar durch bspw. sägen, bohren, fräsen und dgl. ist.

Die obere Schicht aus wenigstens einem (Meth)acrylatcopolymer, welche über ihre Dicke für sichtbares Licht einen Transmissionsgrad von mindestens 80 % gemessen nach ISO 13468-2 aufweist, ist weiterhin so ausgebildet, dass sie einen Haze von < 0,5 gemessen nach ASTM D 1003 sowie eine Brechungszahl mit einen Wert von etwa 1,4 bis 1,52 gemessen nach ISO 489 aufweist.
Bei dem mehrschichtigen Verbundkörper weist die obere Schicht weiterhin wengistens ein (Meth)acrylatcopolymer auf, mit einem Schmelzindex von etwa 1,3 bis 1,8 g / 10 min. bei 3,8 kg und 230 °C gemessen nach ISO 1133.
Das (Meth)acrylatcopolymer ist weiterhin so ausgebildet, dass es vorteilhafterweise eine Glasübergangstemperatur von etwa 100 bis 105 °C gemessen nach ISO 306 sowie eine Glasübergangstemperatur von etwa 100 bis 116 °C gemessen nach ISO 11357 aufweist.

Die obere Schicht umfasst ein (Meth)acrylcopolymer bevorzugt PMMA. Optional kann die obere Schicht UV-Additive im Ausmaß von jeweils 0,01 bis 8 Gew.-% aufweisen. Dadurch werden die in der Zwischenschicht eingesetzten Werkstoffe und Farbmittel vor einer UV-Einstrahlung zusätzlich geschützt, wodurch die Farbstabilität über die Verwendungsdauer deutlich verbessert ist.
PMMA als Werkstoff für die obere Schicht gewährleistet neben der sehr guten UV-Beständigkeit auch eine sehr gute Kratz- und Chemikalienbeständigkeit sowie einen sehr hohen Oberflächenglanz.

Der mehrschichtige Verbundkörper weist eine Zwischenschicht auf aus wenigstens einem (Meth)acrylatcopolymer, enthaltend Additive wie Pigmente und/oder Farbstoffe und ggf. Lichtschutzmittel, die aus einem mit der oberen Schicht identischen oder verschiedenen (Meth)acrylatcopolymer besteht mit einem Längenausdehnungskoeffizient von etwa 7 bis 9,5 x 10⁻⁵ K⁻¹, vorzugsweise 7 bis 9,5 x 10⁻⁵ K⁻¹, gemessen nach ISO 11359,

Der mehrschichtiger Verbundkörper zeichnet sich weiterhin dadurch aus, dass das (Meth)acrylatcopolymer der oberen Schicht und/oder der Zwischenschicht aus folgenden Einheiten bestehen:
a) 95 bis 5 Gew.-% Methylmethacrylat-Einheiten und ggf. 0 bis 40 Gew.-% weiteren vinylischen Monomereinheiten und
b) 5 bis 95 Gew.-% Estern der (Meth)acrylsäure, die folgende Reste in der Estergruppe aufweisen können:
   - Cycloalkyl- oder ein mehrfach alkylsubstituierter Cycloalkylrest mit 5 bis 12 C-Atomen, wobei die genannten Reste über Alkylengruppen mit 1 bis 6 C-Atomen, die auch verzweigt sein können, oder Oxyalkylengruppen mit 2 bis 4 C-Atomen an den (Meth)acrylsäurecarboxylrest gebunden sein können.

Der mehrschichtige Verbundkörper weist ebenfalls eine untere Schicht auf, enthaltend Additive wie Pigmente und / oder Farbstoffe und ggf. Lichtschutzmittel sowie wenigstens ein Styrolpolymer, insbesondere Styrol-Copolymer.
Das Styrol-Copolymer kann dabei ein Acrylnitril-Butadien-Styrol (ABS) mit einem Schmelzindex von etwa 15 g / 10 min. bei 220 °C / 10 kg gemessen nach ISO 1133 sein und muss einen Wert der Verarbeitungsschwindung von 0,3 bis 0,7 % gemessen nach ISO 294-4 aufweisen. Die Formbeständigkeitstemperatur beträgt dabei etwa 100 °C gemessen nach ISO 75-2/A.
Das Styrol-Copolymer kann vorteilhafterweise auch ein Styrol-Acrylnitril (SAN) sein, mit einer Schmelzvolumenrate von etwa 10 cm³ / 10 min. bei 220 °C / 10 kg gemessen nach ISO 1133 und einer Verarbeitungsschwindung von etwa 0,3 bis 0,7 % gemessen nach ISO 294-4.

In einer weiteren vorteilhaften Ausgestaltung des mehrschichtigen Verbundkörpers weist die obere Schicht wenigstens eine Deckschicht mit einer Dicke von etwa 2 bis 60 µm, vorzugsweise 5 bis 30 µm auf. Diese Deckschicht verleiht dem mehrschichtigen Verbundkörper eine erhöhte Kratzbeständigkeit gemäß DIN EN 15186 sowie eine hohe chemische Beständigkeit gemäß DIN 68861 Teil 1.

Der erfindungsgemäße mehrschichtige Verbundkörper zeichnet sich weiterhin dadurch aus, dass die Deckschicht wenigstens ein Acrylpolymer umfasst sowie über ihre Dicke für sichtbares Licht einen Transmissionsgrad von mindestens 80 % gemessen nach ISO 3468-2 aufweist. Hierdurch lässt sich ein mehrschichtiger Verbundkörper zur Verfügung stellen, der eine Optik aufweist, die der einer teureren und schwerer zu bearbeitenden Glasscheibe entspricht und in Verbindung mit der Dicke bzw. der Werkstoffwahl der oberen Schicht eine noch bessere Glasoptik bringt.

Es hat sich weiterhin als vorteilhaft herausgestellt, dass der mehrschichtige Verbundkörper auf der oberen Schicht eine Deckschicht aufweist, die wenigstens ein Acrylpolymer umfasst sowie über ihre Dicke für sichtbares Licht einen Transmissionsgrad von maximal etwa 80 % gemessen nach ISO 13468-2 aufweist. Hierdurch lassen sich mehrschichtige Verbundkörper zur Verfügung stellen, deren Oberfläche nicht hochglänzend ist, sondern die Optik einer matten bzw. satinierten Glasscheibe aufweist.

Es hat sich weiterhin als vorteilhaft herausgestellt, dass beim erfindungsgemäßen mehrschichtigen Verbundkörper das Verhältnis der Dicke der oberen Schicht zur Dicke der Zwischenschicht wenigstens 5 beträgt. Hierdurch sind unterschiedliche Glasoptiken wirtschaftlich herstellbar, wobei die transparente Glasoptik der oberen Schicht durch die nicht transparente, farbige Zwischenschicht optisch ansprechend zur Geltung kommt.

Bei dem mehrschichtigen Verbundkörper wurde weiterhin vorteilhafterweise festgestellt, dass die untere Schicht eine Dicke von etwa 0,1 bis 1,5 mm, vorzugsweise 0,2 bis 1,0 mm aufweist. Hierdurch ist der mehrschichtige Verbundkörper je nach Dicke der oberen Schicht, der Zwischenschicht und der unteren Schicht nicht nur wirtschaftlich und kostengünstig herstellbar, sondern in seinen Oberflächenanforderungen optimal eingestellt und ohne Verzug des mehrschichtigen Aufbaus.

In dieser vorteilhaften Ausgestaltung des mehrschichtigen Verbundkörpers ist dieser nicht nur wirtschaftlich und kostengünstig herstellbar, sondern weist nahezu keinen Verzug auf. Der mehrschichtige Verbundkörper ist durch die so dimensionierte und aufgebaute untere Schicht jederzeit wirtschaftlich und problemlos an beispielsweise Möbelbauplatten aus Holz, Holzwerkstoffen bzw. Holzersatzwerkstoffen fixierbar. Dieser Blend weist einen Längenausdehnungskoeffizient von etwa 6,5 bis 9,5 x 10⁻⁵ K⁻¹, vorzugsweise 6,5 bis 9,5 x 10⁻⁵ K⁻¹, gemessen nach ISO 11359 auf, sowie eine Verarbeitungsschwindung von etwa 0,3 bis 0,7 % gemessen nach ISO 294-4. Die Vicat-Erweichungstemperatur des Blendes liegt etwa bei 97 bis 107 °C gemessen nach ISO 306/B50, die Formbeständigkeitstemperatur liegt etwa bei 88 bis 100 °C (1,8 MPa - geglüht) gemessen nach ISO 75-2/A.

Die Definition der Begriffe zu Additiven ist wie folgt:
Zusätzlich können den einzelnen Schichten unterschiedliche Mengen an Gew.-% von Additiven zugesetzt sein wie z.B. UV-Absorber, UV-Stabilisatoren, Gleitmitteln, Oxidationsstabilisatoren, Flammschutzmittel, Synergisten, Farbmittel und / oder Füllstoffe.
Als Füllstoffe können beispielsweise eingesetzt werden Glimmer, Talkum, CalciumCarbonat, Wollastonit, Dolomit, Faser anorganischen Ursprungs wie beispielsweise Carbonfasern und / oder Glasfasern und dergleichen.

Ein ebenfalls wichtiger Vorteil des mehrschichtigen Verbundkörpers besteht darin, dass das Trägerelement aus Holz, Holzwerkstoffen, Holzersatzstoffen, polymeren Werkstoffen, metallischen Werkstoffen, keramischen Werkstoffen, Glas, Papier und dergleichen ausgebildet ist. Hierdurch sind mehrschichtige Verbundkörper mit unterschiedlichsten Eigenschaften kostengünstig herstellbar.

Weiterhin vorteilhaft wird gesehen, dass bei dem mehrschichtigen Verbundkörper die Dicke etwa 1 bis 6 mm, vorzugsweise 1 bis 4 mm beträgt.

Ein weiterer wichtiger Vorteil des mehrschichtigen Verbundkörpers besteht darin, dass das Verhältnis von Längenausdehnungskoeffizient der oberen Schicht zum Längenausdehnungskoeffizient der unteren Schicht etwa 0,8 bis 1,2 ist. Hierdurch können mehrschichtige Verbundkörper zur Verfügung gestellt werden, die sich sowohl wirtschaftlich als auch kostengünstig herstellen lassen, die aber auch während bzw. nach ihrer Herstellung nahezu keinen Verzug über ihre Breite bzw. über ihre Länge aufweisen. Dies ist einerseits durch die Wahl der Dicke der oberen Schicht und / oder der unteren Schicht und/oder andererseits durch die Wahl des Längenausdehnungskoeffizient des Werkstoffes der oberen Schicht und / oder unteren Schicht möglich.

Durch die Wahl der Werkstoffe für die Schichten sowie der Begrenzung/ Dimensionierung vom Längenausdehnungskoeffizient gemessen nach ISO 13468-2 ist es somit überraschend möglich, mehrschichtige Verbundkörper zur Verfügung zu stellen, die wirtschaftlich sowie kostengünstig herstellbar sind und die erstmals eine Kombination der Vorteile der Schichten der Verbundplatten unter Ausschluss der Nachteile des Standes der Technik ermöglichen.

Der mehrschichtige Verbundkörper soll und anhand eines Ausführungsbeispiels, welches die Erfindung nicht einschränkt, näher beschrieben werden.

Es zeigt:

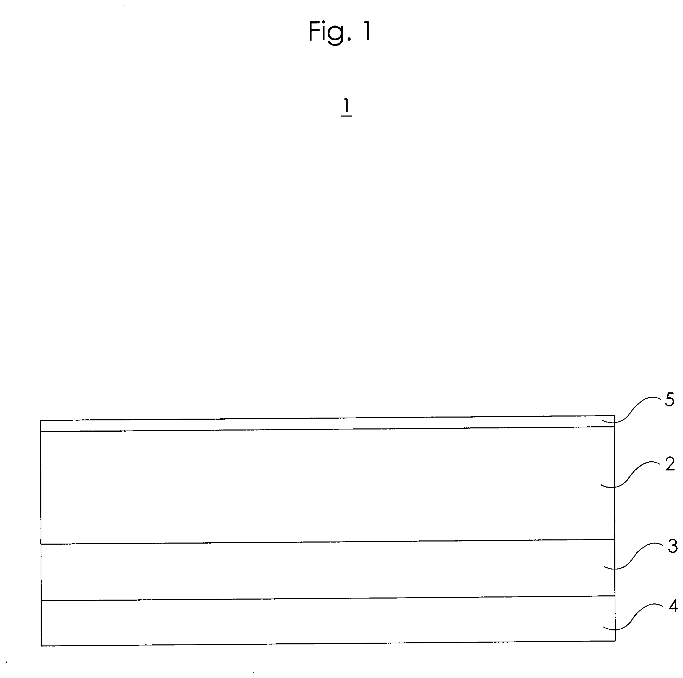

- Fig. 1: erfindungsgemäßer mehrschichtiger Verbundkörper

In der Fig. 1 ist der mehrschichtige Verbundkörper dargestellt, umfassend eine erste Verbundplatte 1 mit einer oberen Schicht 2, einer Zwischenschicht 3, einer unteren Schicht 4 sowie eine an der oberen Schicht 2 angeordneten Deckschicht 5.

Die obere Schicht 2 besteht aus einem (Meth)acrylatcopolymer, in diesem Ausführungsbeispiel aus einem Polymethylmethacrylat (PMMA), welches aus folgenden Einheiten besteht:
a) 95 bis 5 Gew.-% Methylmethacrylat-Einheiten und ggf. 0 bis 40 Gew.-% weiteren vinylischen Monomereinheiten und
b) 5 bis 95 Gew.-% Estern der (Meth)acrylsäure, die folgende Reste in der Estergruppe aufweisen können:
   - Cycloalkyl- oder ein mehrfach alkylsubstituierter Cycloalkylrest mit 5 bis 12 C-Atomen, wobei die genannten Reste über Alkylengruppen mit 1 bis 6 C-Atomen, die auch verzweigt sein können, oder Oxyalkylengruppen mit 2 bis 4 C-Atomen an den (Meth)acrylsäurecarboxylrest gebunden sein können.

Der Werkstoff der oberen Schicht 2 weist über die Dicke von etwa 2 mm für sichtbares Licht einen Transmissionsgrad von 90 % gemessen nach ISO 3468-2 und einen Längenausdehnungskoeffizient von etwa 8 x 10⁻⁵ K⁻¹ gemessen nach ISO 11359 auf.

Die Zwischenschicht 3 besteht ebenfalls aus einem (Meth)acrylatcopolymer mit den folgenden Einheiten
a) 95 bis 5 Gew.-% Methylmethacrylat-Einheiten und ggf. 0 bis 40 Gew.-% weiteren vinylischen Monomereinheiten und
b) 5 bis 95 Gew.-% Estern der (Meth)acrylsäure, die folgende Reste in der Estergruppe aufweisen können:
   - Cycloalkyl- oder ein mehrfach alkylsubstituierter Cycloalkylrest mit 5 bis 12 C-Atomen, wobei die genannten Reste über Alkylengruppen mit 1 bis 6 C-Atomen, die auch verzweigt sein können, oder Oxyalkylengruppen mit 2 bis 4 C-Atomen an den (Meth)acrylsäurecarboxylrest gebunden sein können.

Die Zwischenschicht 3 enthält weiterhin Additive wie Pigmente und / oder Farbstoffe und ggf. Lichtschutzmittel in einer Menge von etwa 1 bis 20, vorzugsweise 2 bis 15 Gew.-%, welche die Optik des mehrschichtigen Verbundkörpers definieren. Die Zwischenschicht 3 ist in diesem Ausführungsbeispiel aus dem identischen (Meth)acrylatcopolymer hergestellt mit einem Längenausdehnungskoeffizient von etwa 8 x 10⁻⁵ K⁻¹ gemessen nach ISO 11359.

Es liegt auch im Rahmen der Erfindung, dass die Zwischenschicht 3 wenigstens ein (Meth)acrylatcopolymer aufweist, welches zum (Meth)acrylatcopolymer der oberen Schicht 2 verschieden ist und welches aus den folgenden Einheiten besteht:
a) 95 bis 5 Gew.-% Methylmethacrylat-Einheiten und ggf. 0 bis 40 Gew.-% weiteren vinylischen Monomereinheiten und
b) 5 bis 95 Gew.-% Estern der (Meth)acrylsäure, die folgende Reste in der Estergruppe aufweisen können:
   - Cycloalkyl- oder ein mehrfach alkylsubstituierter Cycloalkylrest mit 5 bis 12 C-Atomen, wobei die genannten Reste über Alkylengruppen mit 1 bis 6 C-Atomen, die auch verzweigt sein können, oder Oxyalkylengruppen mit 2 bis 4 C-Atomen an den (Meth)acrylsäurecarboxylrest gebunden sein können.

Der mehrschichtige Verbundkörper 1 weist weiterhin eine an der Zwischenschicht 3 angeordnete untere Schicht 4 auf enthaltend Additive wie Pigmente und / oder Farbstoffe und ggf. Lichtschutzmittel in einer Menge von etwa 1 bis 20, vorzugsweise 2 bis 15 Gew.-%, sowie wenigstens ein Styrol-Polymer, insbesondere Styrol-Copolymer, mit einem Längenausdehnungskoeffizient von etwa 6,5 bis 9,5 x 10⁻⁵ K⁻¹, vorzugsweise 6,5 bis 9,5 x 10⁻⁵ K⁻¹, gemessen nach ISO 11359. In diesem Ausführungsbeispiel weist die untere Schicht 4 einen Blend von Acrylnitril-Butadien-Styrol-Copolymer (ABS) mit einem Anteil von 50 Gew.-% Styrol-Acrylnitril (SAN) auf.

Der mehrschichtige Verbundkörper 1 weist eine Gesamtdicke von etwa 2,5 mm auf und das Material des mehrschichtigen Verbundkörpes 1 einen Längenausdehnungskoeffizient von etwa 6 bis 6,3 x 10⁻⁵ K⁻¹ gemessen nach ISO 11359.

Der mehrschichtige Verbundkörper 1 wird dabei im an sich bekannten Koextrusionsverfahren hergestellt. Das Material der mehrschichtigen Verbundkörpers1 weist einen Längenausdehnungskoeffizient in Extrusionsrichtung von etwa 6,3 bis 6,7 x 10⁻⁵ K⁻¹, vorzugsweise 6,3 bis 6,7 x 10⁻⁵ K⁻¹, gemessen nach ISO 11359 auf, sowie einen Längenausdehnungskoeffizient orthogonal zur Extrusionsrichtung von etwa 6 bis 6,3 x 10⁻⁵ K⁻¹, vorzugsweise 6 bis 6,3 x 10⁻⁵ K⁻¹, gemessen nach ISO 11359 auf.

An der der unteren Schicht 4 gegenüberliegenden Seite der oberen Schicht 2 ist eine Deckschicht 5 angeordnet. Diese Deckschicht 5 weist eine Dicke von etwa 10 µm auf, umfassend wenigstens ein Acrylpolymer sowie über ihre Dicke von 10 µm für sichtbares Licht einen Transmissionsgrad von etwa 92 % gemessen nach ISO 13468-2. Die Deckschicht 5 weist somit einen größeren Transmissionsgrad gemessen nach ISO 13468-2 auf als die darunter angeordnete obere Schicht 10. Dies führt vorteilhafterweise zu einer noch besseren Glasoptik des erfindungsgemäßen mehrschichtigen Verbundkörpers.

Es liegt jedoch auch im Rahmen der Erfindung, dass die auf der oberen Schicht 2 des mehrschichtigen Verbundkörper 1 angeordnete Deckschicht 5 eine Dicke von etwa 15 µm aufweist und ein Acrylpolymer umfasst, welches der Deckschicht 5 über ihre Dicke für sichtbares Licht einen Transmissionsgrad von etwa 65 % gemessen nach ISO 13468-2 verleiht, so dass der mehrschichtige Verbundkörper 1 an seiner Oberseite eine matte bzw. satinierte Glasoptik aufweist.

Der mehrschichtige Verbundkörper 1 ist in diesem Ausführungsbeispiel so ausgebildet, dass das Verhältnis der Dicke zur oberen Schicht 2 zur Zwischenschicht 3 etwa 10 beträgt. Die Dicke der Zwischenschicht 3 beträgt etwa 0,2 mm.

Durch dieses vorteilhafte Dickenverhältnis der beiden Schichten 2, 3 ist ein erfindungsgemäßer mehrschichtiger Verbundkörper wirtschaftlich und kostengünstig herstellbar, der eine exzellente Glasoptik an seiner Oberfläche und eine gute Farbkonstanz bzw. Farbbrillanz der Zwischenschicht aufweist.

Der mehrschichtige Verbundkörper 1 ist weiterhin so ausgebildet, dass die untere Schicht 4 in diesem Ausführungsbeispiel eine Dicke von etwa 0,3 mm aufweist. Durch die Wahl des Werkstoffes bzw. der Dicke der oberen Schicht 2, der Zwischenschicht 3 sowie der unteren Schicht 4 lässt sich ein nahezu verzugsfreier mehrschichtiger Verbundkörper 1 kostengünstig und wirtschaftlich herstellen, der über seine gesamte Oberfläche nahezu verzugsfrei ist.

Der mehrschichtige Verbundkörper 1 ist in diesem Ausführungsbeispiel weiterhin so ausgebildet, dass das Verhältnis der Dicke der oberen Schicht 2 zur Dicke der Zwischenschicht 3 und der unteren Schicht 4 wenigstens 2 beträgt.

Bei dem mehrschichtigen Verbundkörper 1 hat sich weiterhin als sehr vorteilhaft herausgestellt, dass das Verhältnis des Längenausdehnungskoeffizient des Materials der oberen Schicht 2 zum Längenausdehnungskoeffizient des Materials der unteren Schicht 4 etwa 0,8 bis 1,2 gemessen nach ISO 11359 ist. In diesem Ausführungsbeispiel ist das Verhältnis der Längenausdehnungskoeffizienten etwa 1 x 10⁻⁵ K⁻¹, da hierdurch der mehrschichtige Verbundkörper 1 im an sich bekannten Koextrusionsverfahren kostengünstig und wirtschaftlich herstellbar ist und sowohl während als auch nach der Herstellung nahezu ohne Verzug zur Verfügung stellbar ist.

Der erfindungsgemäße mehrschichtige Verbundkörper 1 zeichnet sich weiterhin dadurch aus, dass die obere Schicht 2 und / oder die Zwischenschicht 3 und / oder die untere Schicht 4 eine Verarbeitungsschwindung von etwa 0,3 bis 0,7 % gemessen nach ISO 294-4 aufweisen, so dass der mehrschichtige Verbundkörper 1 erstmals nicht nur wirtschaftlich und kostengünstig herstellbar, sondern auch nahezu verzugsfrei für den Einsatz bspw. in der Möbelindustrie zur Verfügung stellbar ist. Dabei ist eine industrielle Verarbeitbarkeit insbesondere dadurch gegeben, dass der mehrschichtige Verbundkörper 1 als Platte in Größen von etwa 1300 mm x 2800 mm zur Verfügung stellbar ist.

## Patentansprüche

1. Mehrschichtiger Verbundkörper (1) umfassend:
• einer oberen Schicht (2), aus wenigstens einem (Meth)acrylatcopolymer, welches einen Längenausdehnungskoeffizient von etwa 7 bis 9,5 x 10⁻⁵ K⁻¹ gemessen nach ISO 11359 aufweist,
• einer Zwischenschicht (3) aus wenigstens einem (Meth)acrylatcopolymer, enthaltend Pigmente und/oder Farbstoffe ggf. Lichtschutzmittel, welches einen Längenausdehnungskoeffizient von etwa 7 bis 9,5 x 10⁻⁵ K⁻¹ gemessen nach ISO 11359 aufweist,
• einer unteren Schicht (4) umfassend wenigstens ein Styrolpolymer, insbesondere Styrolcopolymer, welches einen Blend von Acrylnitril-Butadien-Styrol-Copolymer (ABS) mit einem Anteil von etwa 10 bis 90 Gew.-% Styrol-Acrylnitril (SAN), vorzugsweise 20 bis 80 Gew.-% Styrol-Acrylnitril (SAN) aufweist, mit einem Längenausdehnungskoeffizient von etwa 6,5 bis 9,5 x 10⁻⁵ K⁻¹ gemessen nach ISO 11359, sowie eine Verarbeitungsschwindung von etwa 0,3 bis 0,7 % gemessen nach ISO 294-4,
wobei der mehrschichtige Verbundkörper (1) eine Gesamtdicke von wenigstens 1 mm und das Material des mehrschichtigen Verbundkörpers (1) einen Längenausdehnungskoeffizient von etwa 5 bis 7 x 10⁻⁵ K⁻¹ gemessen nach ISO 11359 aufweist.

2. Mehrschichtiger Verbundkörper (1) nach Anspruch 1, **dadurch gekennzeichnet, dass** die obere Schicht (2) des mehrschichtige Verbundkörpers (1) über ihre Dicke für sichtbares Licht einen Transmissionsgrad von mindestens 80 % gemessen nach ISO 13468-2 aufweist.

3. Mehrschichtiger Verbundkörper (1) nach einem der vorhergehenden Ansprüche, **dadurch gekennzeichnet, dass** die obere Schicht (2) wenigstens eine Deckschicht (5) mit einer Dicke von etwa 2 bis 60 µm vorzugsweise 5 bis 30 µm aufweist.

4. Mehrschichtiger Verbundkörper (1) nach Anspruch 3, **dadurch gekennzeichnet, dass** die Deckschicht (5) wenigstens ein Acrylpolymer umfasst sowie über ihre Dicke für sichtbares Licht einen Transmissionsgrad von mindestens 80 % gemessen nach ISO 13468-2 aufweist.

5. Mehrschichtiger Verbundkörper (1) nach Anspruch 3, **dadurch gekennzeichnet, dass** die Deckschicht (5) wenigstens ein Acrylpolymer umfasst sowie über ihre Dicke für sichtbares Licht einen Transmissionsgrad von maximal etwa 80 % gemessen nach ISO 13468-2 aufweist.

6. Mehrschichtiger Verbundkörper (1) nach einem der vorhergehenden Ansprüche, **dadurch gekennzeichnet, dass** das Verhältnis der Dicke der oberen Schicht (2) zur Dicke der Zwischenschicht (3) wenigstens 5 beträgt.

7. Mehrschichtiger Verbundkörper (1) nach einem der vorhergehenden Ansprüche, **dadurch gekennzeichnet, dass** die untere Schicht (4) eine Dicke von etwa 0,1 bis 1,5 mm, vorzugsweise 0,2 bis 1,0 mm aufweist.

## Claims

1. A multi-layer composite body (1) comprising:
• an upper layer (2), composed of at least one (meth)acrylate copolymer having a coefficient of linear thermal expansion of approximately 7 to 9.5 x 10⁻⁵ K⁻¹ measured according to ISO 11359,
• an intermediate layer (3) composed of at least one (meth)acrylate copolymer, containing pigments and/or dyes and optionally light stabilisers, having a coefficient of linear thermal expansion of approximately 7 to 9.5 x 10⁻⁵ K⁻¹ measured according to ISO 11359,
• a lower layer (4) comprising at least one styrene polymer, in particular a styrene copolymer having a blend of acrylonitrile-butadiene-styrene copolymer (ABS) with a proportion of approximately 10 to 90 wt.% styrene-acrylonitrile (SAN), preferably 20 to 80 wt.% styrene -acrylonitrile (SAN), having a coefficient of linear thermal expansion of approximately 6.5 to 9.5 x 10⁻⁵ K⁻¹ measured according to ISO 11359, and a moulding shrinkage of approximately 0.3 to 0.7% measured according to ISO 294-4,
wherein the multi-layer composite body (1) has a total thickness of at least 1 mm and the material of the multi-layer composite body (1) has a coefficient of linear thermal expansion of approximately 5 to 7 x 10⁻⁵ K⁻¹ measured according to ISO 11359.

2. The multi-layer composite body (1) according to claim 1, **characterised in that** the upper layer (2) of the multi-layer composite body (1) has a transmittance for visible light of at least 80% through its thickness, measured according to ISO 13468-2.

3. The multi-layer composite body (1) according to one of the preceding claims, **characterised in that** the upper layer (2) has at least one covering layer (5) with a thickness of approximately 2 to 60 µm, preferably 5 to 30 µm.

4. The multi-layer composite body (1) according to claim 3, **characterised in that** the covering layer (5) comprises at least one acrylic polymer and has a transmittance for visible light of at least 80% through its thickness, measured according to ISO 13468-2.

5. The multi-layer composite body (1) according to claim 3, **characterised in that** the covering layer (5) comprises at least one acrylic polymer and has a transmittance for visible light of no more than approximately 80% through its thickness, measured according to ISO 13468-2.

6. The multi-layer composite body (1) according to one of the preceding claims, **characterised in that** the ratio of the thickness of the upper layer (2) to the thickness of the intermediate layer (3) is at least 5.

7. The multi-layer composite body (1) according to one of the preceding claims, **characterised in that** the lower layer (4) has a thickness of approximately 0.1 to 1.5 mm, preferably 0.2 to 1.0 mm.

## Revendications

1. Corps composite (1) multicouches comprenant :
• une couche supérieure (2), constituée d'au moins un copolymère de (méth)acrylate, qui présente un coefficient d'allongement linéaire d'environ 7 à 9,5 x 10⁻⁵ K⁻¹ mesuré selon ISO 11359,
• une couche intermédiaire (3) constituée d'au moins un copolymère de (méth)acrylate contenant des pigments et/ou des colorants, le cas échéant des stabilisants contre l'effet de la lumière, qui présente un coefficient d'allongement linéaire d'environ 7 à 9,5 x 10⁻⁵ K⁻¹ mesuré selon ISO 11359,
• une couche inférieure (4) comprenant au moins un polymère styrénique, en particulier un copolymère styrénique, qui comporte un mélange de copolymère d'acrylonitrile butadiène styrène (ABS) avec une teneur d'environ 10 à 90 % en poids en styrène acrylonitrile (SAN), de préférence 20 à 80 % en poids en styrène acrylonitrile (SAN), avec un coefficient d'allongement linéaire d'environ 6,5 à 9,5 x 10⁻⁵ K⁻¹ mesuré selon ISO 11359 ainsi qu'un retrait au moulage d'environ 0,3 à 0,7 % mesuré selon ISO 294-4,
le corps composite (1) multicouches présentant une épaisseur totale d'au moins 1 mm et le matériau du corps composite (1) multicouches présentant un coefficient d'allongement linéaire d'environ 5 à 7 x 10⁻⁵ K⁻¹ mesuré selon ISO 11359.

2. Corps composite (1) multicouches selon la revendication 1, **caractérisé en ce que** la couche supérieure (2) du corps composite (1) multicouches présente, sur son épaisseur, un facteur de transmission pour la lumière visible d'au moins 80 % mesuré selon ISO 13468-2.

3. Corps composite (1) multicouches selon l'une des revendications précédentes, **caractérisé en ce que** la couche supérieure (2) comporte au moins une couche de revêtement (5) ayant une épaisseur d'environ 2 à 60 µm, de préférence 5 à 30 µm.

4. Corps composite (1) multicouches selon la revendication 3, **caractérisé en ce que** la couche de revêtement (5) comprend au moins un polymère acrylique, et présente, sur son épaisseur, un facteur de transmission pour la lumière visible d'au moins 80 % mesuré selon ISO 13468-2.

5. Corps composite (1) multicouches selon la revendication 3, **caractérisé en ce que** la couche de revêtement (5) comprend au moins un polymère acrylique, et présente, sur son épaisseur, un facteur de transmission pour la lumière visible d'environ 80 % maximum mesuré selon ISO 13468-2.

6. Corps composite (1) multicouches selon l'une des revendications précédentes, **caractérisé en ce que** le rapport entre l'épaisseur de la couche supérieure (2) et l'épaisseur de la couche intermédiaire (3) est d'au moins 5.

7. Corps composite (1) multicouches selon l'une des revendications précédentes, **caractérisé en ce que** la couche inférieure (4) présente une épaisseur d'environ 0,1 à1,5 mm, de préférence 0,2 à 1,0 mm.
